# EUROPEAN PATENT APPLICATION

(11) **EP 3 565 046 A1**
(43) Date of publication of application: **06.11.2019**
(21) Application number: 17885714.0
(22) Date of filing: 25.12.2017
(51) Int. Cl.: H01M 8/18, H01M 8/04, H01M 8/04186

(54) **REDOX FLOW BATTERY SYSTEM AND REDOX FLOW BATTERY OPERATION METHOD**

(30) Priority: 28.12.2016 JP 2016256178
(71) Applicant: Showa Denko K.K., Tokyo 105-8518 (JP)
(72) Inventor: TOMITA, Miyuki, Tokyo 105-8518 (JP)
(74) Representative: Strehl Schübel-Hopf & Partner
(86) International application number: PCT/JP2017/046416
(87) International publication number: WO 2018/123962

(57) **Abstract**

Provided is a redox flow battery system capable of, even when a high concentration vanadium electrolyte is used, achieving high charge/discharge efficiency and suppression of corrosion with a simple configuration by dissolving and removing a precipitate and by adjusting the balance of the electrolyte. The redox flow battery system is provided with: a positive-electrode electrolyte tank 11 in which a positive-electrode electrolyte containing tetravalent and/or pentavalent vanadium is stored; a positive-electrode electrolyte outgoing pipe 13 and positive-electrode electrolyte return pipe 14 for circulating the positive-electrode electrolyte between the positive-electrode electrolyte tank 11 and a battery cell 2; a negative-electrode electrolyte tank 21 in which a negative-electrode electrolyte containing divalent and/or trivalent vanadium is stored; a negative-electrode electrolyte outgoing pipe 23 and a negative-electrode electrolyte return pipe 24 for circulating the negative-electrode electrolyte between the negative-electrode electrolyte tank 21 and the battery cell 2; a maintenance tank 40 in which a cleaning liquid containing sulfuric acid is stored; and a cleaning liquid outgoing pipe 41 and a cleaning liquid return pipe 42 for circulating the cleaning liquid between the maintenance tank 40 and the battery cell 2.

## Description

### TECHNICAL FIELD

The present invention relates to a redox flow battery system and a method of operating a redox flow battery, and more particularly, to a vanadium-based redox flow battery system that uses vanadium as an active material of a positive electrode and a negative electrode, and a method of operating a redox flow battery.

### BACKGROUND ART

As an electric power storage battery, development of various batteries has been in progress, and examples thereof include an electrolyte circulation type battery, a so-called redox flow battery. In the redox flow battery, a positive-electrode electrolyte and a negative-electrode electrolyte are supplied and circulated to a battery cell including a positive electrode, a negative electrode, and a membrane interposed between the electrodes, and charge/discharge is performed through an electric power converter (for example, an AC/DC converter or the like). As the electrolytes, an aqueous solution that contains a metal ion (active material) of which a valence number varies through redox is used. For example, a vanadium-based redox flow battery that uses vanadium (V) as the active material of the positive electrode and the negative electrode is well known.

Typically, in the redox flow battery, the greater the amount of the active material in the electrolyte, the further an energy density increases and the higher charge/discharge efficiency becomes. For example, Patent Document 1 discloses a high concentration vanadium electrolyte that contains vanadium ions in an amount greater than 1.7 mol/L. The high concentration vanadium electrolyte is adjusted by adding a sulfuric acid while pre-electrolyzing a solution obtained by dissolving a vanadium salt in water. When undergoing the adjustment process, the high concentration vanadium electrolyte is obtained without precipitating a vanadium compound.

However, when repetitive charge/discharge is performed by using the high concentration vanadium electrolyte, a vanadium compound in the electrolyte gradually precipitates into a battery cell or the electrolyte as a precipitate. Therefore, an energy density of the battery decreases, or the inside of the battery cell is clogged with the precipitates. As a result, it is difficult to avoid a situation in which the battery does not operate.

Patent Document 2 discloses a redox flow battery system including a storage tank that stores a dilute sulfuric acid for cleaning the inside of the battery cell. In the redox flow battery system, the storage tank is provided in any one or both of a positive electrode and a negative electrode, and the dilute sulfuric acid inside the storage tank is circulated into the battery cell to dissolve and remove precipitates.

Patent Document 1: Japanese Patent No. 5281210
Patent Document 2: U.S. Published Patent Application Publication, No. 2014/0099520, Specification

### DISCLOSURE OF THE INVENTION

### Problems to be Solved by the Invention

In the redox flow battery system, when repetitive charge/discharge is performed, particularly, in a case of using the high concentration vanadium electrolyte, the vanadium compound may precipitate into the battery cell, or a valence number balance of vanadium in the positive electrode and the negative electrode may collapse. In this case, sufficient charge and discharge capacity is not obtained, and corrosion of the electrodes may be caused.

In the redox flow battery system described in Patent Document 2, precipitates which are precipitated can be dissolved and removed, but the storage tank is independently installed in the positive electrode or the negative electrode, or in both the electrodes. Accordingly, it is necessary to individually manage the storage tank, and thus a system becomes complicated. In addition, management of the acid solution becomes complicated, and thus it is necessary to consider an installation space of the storage tank. In addition, in the redox flow battery system described in Patent Document 2, in a case where the valence number balance of vanadium in the electrolyte of the positive electrode and the negative electrode collapses, for example, due to precipitation of the vanadium compound into the battery cell, adjustment is difficult.

An object of the invention is to provide a redox flow battery system and a method of operating a redox flow battery which are capable of achieving high charge/discharge efficiency, and suppression of corrosion by dissolving and removing precipitates which precipitate in a positive electrode, a negative electrode, and circulation paths thereof and by adjusting balance of the electrolyte with a simple configuration even in a case of using a high concentration vanadium electrolyte.

### Means for Solving the Problems

Present inventors have found that when a common maintenance tank communicates with a battery cell and an electrolyte tank that supplies an electrolyte to the battery cell, it is possible to suppress precipitation of precipitates and it is possible to adjust balance of the electrolyte with a simple configuration, and they have accomplished the invention.
(1) The invention is a redox flow battery system that performs charge/discharge by circulating an electrolyte containing vanadium as an active material to a battery cell. The redox flow battery system includes: a positive-electrode electrolyte tank that stores a positive-electrode electrolyte containing tetravalent and/or pentavalent vanadium; a positive-electrode electrolyte outgoing pipe through which the positive-electrode electrolyte is fed from the positive-electrode electrolyte tank to the battery cell; a positive-electrode electrolyte return pipe through which the positive-electrode electrolyte is returned from the battery cell to the positive-electrode electrolyte tank; a negative-electrode electrolyte tank that stores a negative-electrode electrolyte containing divalent and/or trivalent vanadium; a negative-electrode electrolyte outgoing pipe through which the negative-electrode electrolyte is fed from the negative-electrode electrolyte tank to the battery cell; a negative-electrode electrolyte return pipe through which the negative-electrode electrolyte is returned from the battery cell to the negative-electrode electrolyte tank; a maintenance tank that stores a cleaning liquid containing sulfuric acid; a cleaning liquid outgoing pipe that is connected to the positive-electrode electrolyte outgoing pipe and the negative-electrode electrolyte outgoing pipe to transmit the cleaning liquid from the maintenance tank to the battery cell; and a cleaning liquid return pipe that is connected to the positive-electrode electrolyte return pipe and the negative-electrode electrolyte return pipe to return the cleaning liquid from the battery cell to the maintenance tank.
(2) In addition, the invention is the redox flow battery system according to (1), wherein the positive-electrode electrolyte and/or the negative-electrode electrolyte contain vanadium ions of 1.2 mol/L or greater.
(3) In addition, the invention is the redox flow battery system according to (1) or (2), wherein a sulfuric acid concentration of the positive-electrode electrolyte and a sulfuric acid concentration of the negative-electrode electrolyte, and a sulfuric acid concentration of the cleaning liquid are approximately the same as each other.
(4) In addition, the invention is the redox flow battery system according to any one of (1) to (3), wherein the cleaning liquid contains sulfuric acid of which the sulfuric acid concentration is 0.5 mol/L to 6 mol/L.
(5) In addition, the invention is the redox flow battery system according to any one of (1) to (4),wherein one end of the cleaning liquid outgoing pipe is connected to the maintenance tank, another end of the cleaning liquid outgoing pipe is connected to the positive-electrode electrolyte outgoing pipe and the negative-electrode electrolyte outgoing pipe in a branched state, and
   the cleaning liquid outgoing pipe comprises outgoing control valves which control flow of the electrolyte and the cleaning liquid and the outgoing control valves are respectively provided in a portion before branching of the cleaning liquid outgoing pipe, a connection portion between the cleaning liquid outgoing pipe and the positive-electrode electrolyte outgoing pipe, and a connection portion between the cleaning liquid outgoing pipe and the negative-electrode electrolyte outgoing pipe, and
   one end of the cleaning liquid return pipe is connected to the maintenance tank, another end of the cleaning liquid return pipe is connected to the positive-electrode electrolyte return pipe and the negative-electrode electrolyte return pipe in a branched state, and
   the cleaning liquid return pipe comprises return control valves which control flow of the electrolyte and the cleaning liquid and the return control valves are respectively provided in a portion before branching of the cleaning liquid return pipe, a connection portion between the cleaning liquid return pipe and the positive-electrode electrolyte return pipe, and a connection portion between the cleaning liquid return pipe and the negative-electrode electrolyte return pipe.
(6) In addition, the invention is the redox flow battery system according to (5), by controlling the outgoing control valves and the return control valves, the redox flow battery system further comprises a mode setting means capable of setting a charge/discharge mode in which the positive-electrode electrolyte circulates through the positive-electrode electrolyte tank and the battery cell, and the negative-electrode electrolyte circulates through the negative-electrode electrolyte tank and the battery cell, an acid circulation maintenance mode in which the cleaning liquid circulates through the maintenance tank and the battery cell, and an electrolyte maintenance mode in which a part of the electrolyte is moved from the positive-electrode electrolyte tank to the negative-electrode electrolyte tank, or from the negative-electrode electrolyte tank to the positive-electrode electrolyte tank to adjust a redox state of the respective electrolyte tanks by controlling the outgoing control valves and the return control valves.
(7) In addition, the invention is the redox flow battery system according to (6), wherein the mode setting means sets the acid circulation maintenance mode or the electrolyte maintenance mode in correspondence with an operation time.
(8) In addition, the invention is the redox flow battery system according to (6), wherein the mode setting means sets the acid circulation maintenance mode on the basis of a detection result of a precipitate detecting means that detects a presence state of precipitates in the electrolyte.
(9) In addition, the invention is the redox flow battery system according to (6), wherein the mode setting means sets the electrolyte maintenance mode on the basis of a detection result of a valence number detecting means that detects an average oxidation number of vanadium ions in the positive-electrode electrolyte and the negative-electrode electrolyte.
(10) In addition, the invention is a method of operating a redox flow battery that performs charge/discharge by circulating an electrolyte containing vanadium as an active material to a battery cell. The method includes: a charge/discharge process of executing a charge/discharge mode in which a positive-electrode electrolyte containing tetravalent and/or pentavalent vanadium is circulated from a positive-electrode electrolyte tank that stores the positive-electrode electrolyte to the battery cell, and a negative-electrode electrolyte containing divalent and/or trivalent vanadium is circulated from a negative-electrode electrolyte tank that stores the negative-electrode electrolyte to the battery cell; an acid circulation process of executing an acid circulation maintenance mode in which a cleaning liquid containing sulfuric acid is circulated from a maintenance tank that stores the cleaning liquid to the battery cell; and an electrolyte maintenance process of executing an electrolyte maintenance mode in which a part of the electrolyte is moved from the positive-electrode electrolyte tank to the negative-electrode electrolyte tank or from the negative-electrode electrolyte tank to the positive-electrode electrolyte tank.
(11) In addition, the invention is the method of operating a redox flow battery according to (10), wherein the positive-electrode electrolyte and/or the negative-electrode electrolyte contain vanadium ions of 1.2 mol/L or greater.
(12) In addition, the invention is the method of operating a redox flow battery according to (10) or (11), wherein a sulfuric acid concentration of the positive-electrode electrolyte and a sulfuric acid concentration of the negative-electrode electrolyte, and a sulfuric acid concentration of the cleaning liquid are approximately the same as each other.
(13) In addition, the invention is the method of operating a redox flow battery according to any one of (10) to (12), wherein the cleaning liquid contains sulfuric acid of which the sulfuric acid concentration is 0.5 mol/L to 6 mol/L.
(14) In addition, the invention is the method of operating a redox flow battery according to any one of (10) to (13), wherein, in the electrolyte maintenance process, the acid circulation maintenance mode or the electrolyte maintenance mode is executed in correspondence with an operation time.
(15) In addition, the invention is the method of operating a redox flow battery according to any one of (10) to (13), wherein, in the acid circulation process, the acid circulation maintenance mode is executed on the basis of a detection result of a precipitate detecting means that detects a presence state of precipitates in the electrolyte.
(16) In addition, the invention is the method of operating a redox flow battery according to any one of (10) to (13), wherein, in the electrolyte maintenance process, the electrolyte maintenance mode is executed on the basis of a detection result of a valence number detecting means that detects an average valence number of vanadium ions in the positive-electrode electrolyte and the negative-electrode electrolyte.

### Effects of the Invention

According to the invention, it is possible to provide a redox flow battery system and a method of operating a redox flow battery which are capable of achieving high charge/discharge efficiency, and suppression of corrosion by dissolving and removing precipitates which precipitate in a positive electrode, a negative electrode, and circulation paths thereof and by adjusting balance of the electrolyte with a simple configuration even in a case of using a high concentration vanadium electrolyte.

### BRIEF DESCRIPTION OF THE DRAWINGS

Fig. 1 is a configuration diagram illustrating a configuration (charge/discharge mode) of a redox flow battery system.
Fig. 2 is a configuration diagram illustrating a configuration (acid circulation maintenance mode) of the redox flow battery system.
Fig. 3 is a configuration diagram illustrating a configuration (electrolyte maintenance mode) of the redox flow battery system.
Fig. 4 is a block diagram illustrating a partial configuration of the redox flow battery system.

### PREFERRED MODE FOR CARRYING OUT THE INVENTION

Hereinafter, a specific embodiment of the invention will be described in detail with reference to the accompanying drawings. Note that, the invention is not limited to the following embodiment and various modifications can be made in a range not changing the gist of the invention.

### <Redox Flow Battery System>

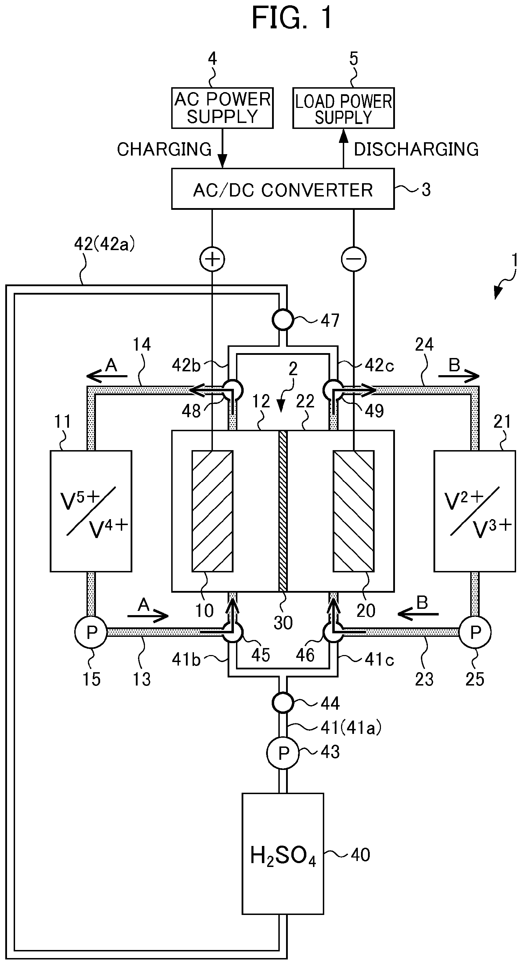

A redox flow battery system according to this embodiment is a redox flow battery 1 that performs charge/discharge by circulating an electrolyte that contains vanadium as an active material through a battery cell 2 as illustrated in Fig. 1. The redox flow battery system charges electric power from an AC power supply 4 such as an electric power station through an AC/DC converter 3, and discharges the charged electric power to a load power supply 5 through the AC/DC converter 3. Note that, the redox flow battery system according to this embodiment can use the following battery cell 2 in a single type, or in a type called a battery cell stack in which a plurality of sheets of the battery cells 2 are stacked as a minimum unit.

### [Basic Configuration]

As illustrated in Fig. 1, the redox flow battery 1 includes the battery cell 2 (a positive-electrode cell 12 and a negative-electrode cell 22) including a positive electrode 10, a negative electrode 20, and a membrane 30 interposed between the electrodes 10 and 20 as a main configuration. In addition, the redox flow battery 1 includes a positive-electrode electrolyte tank 11 that stores a positive-electrode electrolyte containing a tetravalent and/or pentavalent vanadium, a positive-electrode electrolyte outgoing pipe 13 that feeds the positive-electrode electrolyte from the positive-electrode electrolyte tank 11 to the positive-electrode cell 12, and a positive-electrode electrolyte return pipe 14 through which the positive-electrode electrolyte is returned from the positive-electrode cell 12 to the positive-electrode electrolyte tank 11. The positive-electrode electrolyte outgoing pipe 13 includes a pump 15 that circulates the positive-electrode electrolyte. In addition, the redox flow battery 1 includes a negative-electrode electrolyte tank 21 that stores a negative-electrode electrolyte containing divalent and/or trivalent vanadium, a negative-electrode electrolyte outgoing pipe 23 that feeds the negative-electrode electrolyte from the negative-electrode electrolyte tank 21 to the negative-electrode cell 22, and a negative-electrode electrolyte return pipe 24 through which the negative-electrode electrolyte is returned from the negative-electrode cell 22 to the negative-electrode electrolyte tank 21. The negative-electrode electrolyte outgoing pipe 23 includes a pump 25 that circulates the negative-electrode electrolyte.

In addition, the redox flow battery 1 includes a maintenance tank 40 that stores a cleaning liquid that includes a sulfuric acid, a cleaning liquid outgoing pipe 41 that is connected to the positive-electrode electrolyte outgoing pipe 13 and the negative-electrode electrolyte outgoing pipe 23 to feed the cleaning liquid from the maintenance tank 40 to the battery cell 2, and a cleaning liquid return pipe 42 that is connected to the positive-electrode electrolyte return pipe 14 and the negative-electrode electrolyte return pipe 24 to return the cleaning liquid from the battery cell 2 to the maintenance tank 40.

In the cleaning liquid outgoing pipe 41, one end is connected to the maintenance tank 40, and the other end is connected to the positive-electrode electrolyte outgoing pipe 13 and the negative-electrode electrolyte outgoing pipe 23 in a branched state. The cleaning liquid outgoing pipe 41 includes outgoing control valves 44, 45, and 46 which control flow of the electrolyte and the cleaning liquid in the pipe.

In the cleaning liquid return pipe 42, one end is connected to the maintenance tank 40, and the other end is connected to the positive-electrode electrolyte return pipe 14 and the negative-electrode electrolyte return pipe 24 in a branched state. The cleaning liquid return pipe 42 includes return control valves 47, 48, and 49 which control flow of the electrolyte and the cleaning liquid in the pipe.

Hereinafter, the positive electrode 10, the positive-electrode electrolyte tank 11, the negative electrode 20, the negative-electrode electrolyte tank 21, the membrane 30, the maintenance tank 40, and the control valves 44, 45, 46, 47, 48, and 49 will be described in detail.

### (Positive Electrode and Negative Electrode)

Known electrodes can be used as the positive electrode 10 and the negative electrode 20. Although not particularly limited, it is preferable that the electrodes only provide a site at which a redox reaction occurs when vanadium ions in the electrolyte pass through the inside of the battery cell 2 without reacting with vanadium ions, have a structure and a shape with excellent electrolyte permeability, have a very wide surface area, and have low electric resistance. In addition, it is preferable that the electrodes have excellent affinity with the electrolyte (aqueous solution) from the viewpoints of activating a redox reaction, and have a great hydrogen overvoltage and a great oxygen overvoltage from the viewpoint of preventing water decomposition as an auxiliary reaction from occurring. For example, examples of the electrodes include a carbon material such as a carbon felt or a graphitized carbon material, and a mesh-shaped titanium or zirconium substrate coated with a novel metal or carbon.

### (Positive-Electrode Electrolyte Tank)

The positive-electrode electrolyte tank 11 stores the positive-electrode electrolyte, and communicates with the positive-electrode cell 12 through the positive-electrode electrolyte outgoing pipe 13 and the positive-electrode electrolyte return pipe 14. In addition, as will be described later, the positive-electrode electrolyte tank 11 is in a state capable of communicating with the negative-electrode electrolyte tank 21 through the positive-electrode electrolyte outgoing pipe 13, the positive-electrode electrolyte return pipe 14, the negative-electrode electrolyte outgoing pipe 23, the negative-electrode electrolyte return pipe 24, the cleaning liquid outgoing pipe portion 41, and the cleaning liquid return pipe 42.

The positive-electrode electrolyte that is stored in the positive-electrode electrolyte tank 11 is a sulfuric acid aqueous solution of a vanadium salt, and is a sulfuric acid aqueous solution that contains tetravalent and/or pentavalent vanadium. The positive-electrode electrolyte can take a mixed state of tetravalent and pentavalent vanadium ions or a single state of pentavalent vanadium ions in a charge state. A concentration of the tetravalent and/or pentavalent vanadium ions is preferably 1.2 mol/L or greater, and more preferably 1.5 mol/L or greater. Although not particularly limited, the upper limit is preferably 4 mol/L or less, and more preferably 3 mol/L or less. In a case where the concentration of the vanadium ions is excessively small, an energy density of a battery tends to decrease. In a case where the concentration of the vanadium ions is excessively great, precipitates are likely to precipitate, and thus the energy density or charge/discharge efficiency tend to deteriorate. In the redox flow battery system according to this embodiment, as described later, it is possible to dissolve and remove precipitates, and it is possible to adjust balance of the electrolyte. Accordingly, it is particularly preferable to use an electrolyte in which the concentration of the vanadium ions is 1.5 mol/L or greater.

A sulfuric acid concentration of the positive-electrode electrolyte is preferably 0.5 mol/L to 6 mol/L, and more preferably 1 mol/L to 3 mol/L. Here, it is assumed that the sulfuric acid concentration is a concentration of sulfur (S) contained in the electrolyte, and sulfur (S) as a counter ion of a vanadium salt is also included. When the sulfuric acid concentration of the positive-electrode electrolyte is excessively small, vanadium pentoxide (V₂O₅) that is a pentavalent vanadium compound is likely to precipitate.

Note that, additives such as oxo acid including nitric acid, a protective colloid agent, and a complexing agent which are known in the related art may be contained in the positive-electrode electrolyte to prevent precipitation of the precipitates.

### (Negative-Electrode Electrolyte Tank)

The negative-electrode electrolyte tank 21 stores a negative-electrode electrolyte, and communicates with the negative-electrode cell 22 through the negative-electrode electrolyte outgoing pipe 23 and the negative-electrode electrolyte return pipe 24. In addition, the negative-electrode electrolyte tank 21 is in a state capable of communicating with the positive-electrode electrolyte tank 11 through the positive-electrode electrolyte outgoing pipe 13, the positive-electrode electrolyte return pipe 14, the negative-electrode electrolyte outgoing pipe 23, the negative-electrode electrolyte return pipe 24, the cleaning liquid outgoing pipe portion 41, and the cleaning liquid return pipe 42.

The negative-electrode electrolyte stored in the negative-electrode electrolyte tank 21 is a sulfuric acid aqueous solution of a vanadium salt, and is a sulfuric acid aqueous solution containing divalent and/or trivalent vanadium. The negative-electrode electrolyte can take a mixed state of divalent vanadium ions and trivalent vanadium ions or a single state of divalent vanadium ions in a charge state. A concentration of the divalent and/or trivalent vanadium ions is preferably 1.2 mol/L or greater, and more preferably 1.5 mol/L or greater. Although not particularly limited, the upper limit is preferably 4 mol/L or less, and more preferably 3 mol/L or less. In a case where the concentration of the vanadium ions is excessively small, the energy density of the battery tends to decrease, and in a case where the concentration of the vanadium ions is excessively large, the viscosity of the electrolyte increases, and thus precipitates are likely to precipitate. Therefore, battery efficiency deteriorates. In the redox flow battery system according to this embodiment, as described later, it is possible to dissolve and remove precipitates, and it is possible to adjust balance of the electrolyte. Accordingly, it is particularly preferable to use an electrolyte in which the concentration of the vanadium ions is 1.5 mol/L or greater.

As in the positive-electrode electrolyte, a sulfuric acid concentration of the negative-electrode electrolyte is preferably 0.5 mol/L to 6 mol/L, and more preferably 1 mol/L to 3 mol/L. When the sulfuric acid concentration of the negative-electrode electrolyte is excessively large, vanadium sulfate (V₂(SO₄)₃) that is a trivalent vanadium compound is likely to precipitate.

Note that, as in the positive-electrode electrolyte, additives such as oxo acid including nitric acid in the related art, a protective colloid agent, and a complexing agent may be contained in the negative-electrode electrolyte to prevent precipitation of the precipitates.

### (Membrane)

As the membrane 30, a known membrane can be used. Although not particularly limited, for example, an ion exchange membrane formed from an organic polymer, and any of a cation exchange membrane and an anion exchange membrane can be used.

Examples of the cation exchange membrane include a cation exchange membrane obtained through sulfonation of a styrene-divinylbenzene copolymer, a cation exchange membrane in which a sulfonic acid group is introduced into a copolymer of tetrafluoroethylene and perfluorosulfonyl ethoxy vinyl ether, a cation exchange membrane formed from a copolymer of tetrafluoroethylene and a perfluorovinyl ether having a carboxyl group in a side chain, a cation exchange membrane in which a sulfonic acid group is introduced into an aromatic polysulfone copolymer, and the like.

Examples of the anion exchange membrane include an aminated anion exchange membrane obtained by introducing a chloromethyl group into a styrene-divinylbenzene copolymer, an anion exchange membrane obtained through conversion of a vinylpyridine-divinylbenzene copolymer into quaternary pyridinium, an aminated anion exchange membrane obtained by introducing a chloromethyl group into an aromatic polysulfone copolymer, and the like.

### (Maintenance Tank)

As described later, the maintenance tank 40 is in a state capable of communicating with the battery cell 2 through the cleaning liquid outgoing pipe 41 and the cleaning liquid return pipe 42.

It is preferable that the cleaning liquid stored in the maintenance tank 40 be an aqueous solution containing sulfuric acid. As described later, from the viewpoint of reducing an influence on a charge/discharge mode when an acid circulation maintenance mode is transitioned into a charge/discharge mode, it is more preferable that the sulfuric acid concentration of the cleaning liquid be approximately the same as the sulfuric acid concentration of the positive-electrode electrolyte and the negative-electrode electrolyte. Here, it is not necessary for approximately the same concentration to be the same concentration, and a concentration difference of approximately 5% may exist because a fluctuation exists in the sulfuric acid concentration of the positive-electrode electrolyte and the negative-electrode electrolyte due to charge/discharge.

In addition, in a case where it is desired to positively dissolve precipitates, for example, in a case where the precipitates intensely precipitate to a surface of the positive electrode 10 or the negative electrode 20 inside the battery cell 2 (the positive-electrode cell 12 and the negative-electrode cell 22), the sulfuric acid concentration of the cleaning liquid may be set to be higher than the sulfuric acid concentration of the positive-electrode electrolyte and/or the negative-electrode electrolyte. For example, a sulfuric acid aqueous solution, in which the sulfuric acid concentration of the cleaning liquid is as high as 1.5 times the sulfuric acid concentration of the positive-electrode electrolyte and/or the negative-electrode electrolyte, may be used.

### (Control Valve)

The outgoing control valve 44 is disposed in a cleaning liquid outgoing pipe portion 41a before branching and opens or closes a flow passage inside the cleaning liquid outgoing pipe portion 41a. The outgoing control valve 45 is disposed in a connection portion between the positive-electrode electrolyte outgoing pipe 13 and a cleaning liquid outgoing pipe portion 41b after branching, and switches flow passages of the electrolyte and the cleaning liquid inside the positive-electrode electrolyte outgoing pipe 13 and the cleaning liquid outgoing pipe portion 41b. The outgoing control valve 46 is disposed between the negative-electrode electrolyte outgoing pipe 23 and a cleaning liquid outgoing pipe portion 41c after branching, and switches flow passages of the electrolyte and the cleaning liquid inside the negative-electrode electrolyte outgoing pipe 23 and the cleaning liquid outgoing pipe portion 41c.

The return control valve 47 is disposed in a cleaning liquid return pipe portion 42a before branching, and opens or closes a flow passage inside the cleaning liquid return pipe portion 42a. The return control valve 48 is disposed in a connection portion between the positive-electrode electrolyte return pipe 14 and a cleaning liquid return pipe portion 42b after branching, and switches flow passages of the electrolyte and the cleaning liquid inside the positive-electrode electrolyte return pipe 14 and the cleaning liquid return pipe portion 42b. The return control valve 49 is disposed in a connection portion between the negative-electrode electrolyte return pipe 24 and a cleaning liquid return pipe portion 42c after branching, and switches flow passages of the electrolyte and the cleaning liquid inside the negative-electrode electrolyte return pipe 24 and the cleaning liquid return pipe portion 42c.

### [Mode Setting Means]

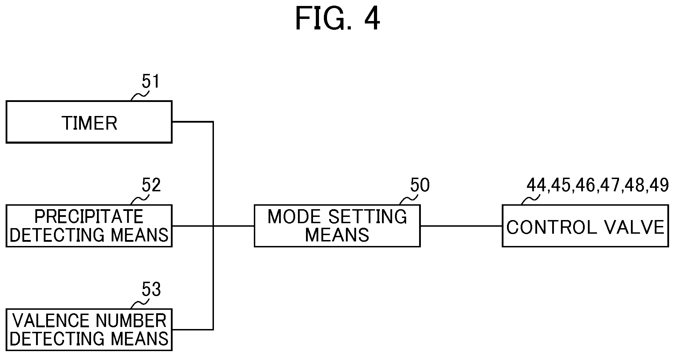

The redox flow battery system according to this embodiment includes a mode setting means 50 capable of setting the charge/discharge mode, the acid circulation maintenance mode, and an electrolyte maintenance mode by controlling the control valves 44, 45, 46, 47, 48, and 49 in the above-described basic configuration. As illustrated in Fig. 4, the mode setting means 50 sets the charge/discharge mode, the acid circulation maintenance mode, and the electrolyte maintenance mode by controlling the control valves 44, 45, 46, 47, 48, and 49 on the basis of a detection result of a timer 51 that integrates an operation time of the battery cell 2, a precipitate detecting means 52, or a valence number detecting means 53. The mode setting means 50 may execute the respective modes in an automatic manner, a semi-automatic manner, or a manual mode. Hereinafter, the respective modes and the respective detecting means will be described.

### (Charge/Discharge Mode)

In the charge/discharge mode, the control valves 44, 45, 46, 47, 48, and 49 are controlled by the mode setting means 50, and thus the positive-electrode electrolyte circulates through the positive-electrode electrolyte tank 11 and the battery cell 2, and the negative-electrode electrolyte circulates through the negative-electrode electrolyte tank 21 and the battery cell 2. Specifically, as illustrated in Fig. 1, in a charge mode in the charge/discharge mode, as indicated by an arrow A, the positive-electrode electrolyte (a sulfuric acid aqueous solution containing V⁵⁺/V⁴⁺ ions) stored in the positive-electrode electrolyte tank 11 is fed to the positive-electrode cell 12 through the positive-electrode electrolyte outgoing pipe 13 and the control valve 45 by the pump 15, and receives an electron from an external circuit in the positive electrode 10 and thus V⁵⁺ is reduced to V⁴⁺. Then, the positive-electrode electrolyte is recovered to the positive-electrode electrolyte tank 11 through the positive-electrode electrolyte return pipe 14 and the control valve 48. On the other hand, as indicated by an arrow B, the negative-electrode electrolyte (the sulfuric acid aqueous solution containing V²⁺/V³⁺) stored in the negative-electrode electrolyte tank 3 is fed to the negative-electrode cell 22 through the negative-electrode electrolyte outgoing pipe 23 and the control valve 46 by the pump 25, and an electron thereof is discharged to the external circuit in the negative electrode 20, and thus V²⁺ is oxidized to V³⁺. Then, the negative-electrode electrolyte is recovered to the negative-electrode electrolyte tank 21 through the negative-electrode electrolyte return pipe 24 and the control valve 49. In a discharge mode in the charge/discharge mode, a reaction opposite to the reaction in the charge mode is progressed. The charge/discharge reaction in the battery cell 2 is as follows.

Positive-electrode cell
Charge: V⁴⁺ → V⁵⁺ + e⁻
Discharge: V⁵⁺ + e⁻ → V⁴⁺
Negative-electrode cell
Charge: V³⁺ + e⁻ → V²⁺
Discharge: V²⁺ → V³⁺ + e⁻

### (Acid Circulation Maintenance Mode)

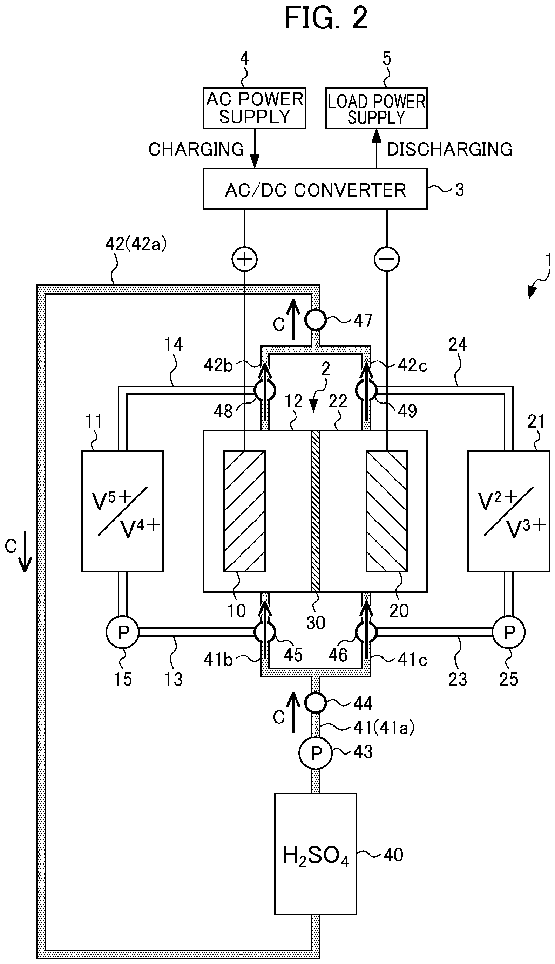

In the acid circulation maintenance mode, the control valves 44, 45, 46, 47, 48, and 49 are controlled by the mode setting means 50, and the cleaning liquid circulates through the maintenance tank 40 and the battery cell 2. Specifically, in the acid circulation maintenance mode, as illustrated in Fig. 2, the cleaning liquid stored in the maintenance tank 40 is fed to the battery cell 2 (the positive-electrode cell 12 and the negative-electrode cell 22) through the cleaning liquid outgoing pipe 41 and the control valves 44, 45, and 46 by a pump 43, and is recovered to the maintenance tank 40 through the cleaning liquid return pipe 42 and the control valves 47, 48, and 49 as indicated by an arrow C direction in the drawing.

When the acid circulation maintenance mode is set, it is possible to dissolve and remove precipitates which precipitate into the battery cell 2. At this time, when the sulfuric acid concentration of the cleaning liquid and the sulfuric acid concentration inside the battery cell 2 are approximately the same as each other, an influence on the subsequent charge/discharge mode is small. In addition, in a case where a precipitation state of the precipitates is intense, the concentration of the cleaning liquid may be set to be higher than the sulfuric acid concentration of the electrolyte to positively dissolve and remove the precipitates.

Note that, in the acid circulation maintenance mode illustrated in Fig. 2, an example in which the cleaning liquid simultaneously cleans the positive-electrode cell 12 and the negative-electrode cell 22. The positive-electrode cell 12 and the negative-electrode cell 22 may be individually cleaned by controlling the control valves 44, 45, 46, 47, 48, and 49.

In addition, the cleaning liquid stored in the maintenance tank 40 may be replaced whenever the acid circulation maintenance mode is executed, or may be replaced after executing the mode a plurality of times. The cleaning liquid recovered to the maintenance tank 40 through execution of the acid circulation maintenance mode may contain impurities other than a vanadium compound. Accordingly, the cleaning liquid after being used is recovered at once from the maintenance tank 40, and may be returned to the maintenance tank 40 to be used after removing and recovering the impurities. In addition, a recovery device such as a filtration device that recovers precipitates which are not dissolved to the cleaning liquid may be provided in the cleaning liquid return pipe portion 42a.

### (Electrolyte Maintenance Mode)

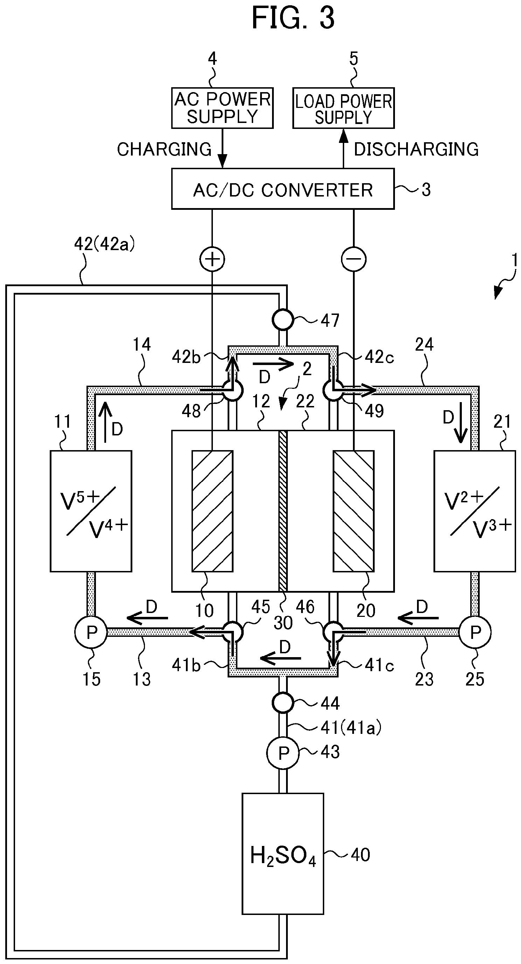

In the electrolyte maintenance mode, the control valves 44, 45, 46, 47, 48, and 49 are controlled by the mode setting means 50 to move a part of the electrolyte from the positive-electrode electrolyte tank 11 to the negative-electrode electrolyte tank 21 or from the negative-electrode electrolyte tank 21 to the positive-electrode electrolyte tank 11, and a redox state of the electrolyte tanks 11 and 21 is adjusted. Specifically, in the electrolyte maintenance mode, as illustrated in Fig. 3, the positive-electrode electrolyte in the positive-electrode electrolyte tank 11, and the negative-electrode electrolyte in the negative-electrode electrolyte tank 21 is circulated through the negative-electrode electrolyte outgoing pipe 23, the cleaning liquid outgoing pipe portions 41b and 41c after branching, the control valves 45 and 46, the positive-electrode electrolyte outgoing pipe 13, the positive-electrode electrolyte return pipe 14, the cleaning liquid return pipe portions 42b and 42c after branching, the control valves 48 and 49, and the negative-electrode electrolyte return pipe 24 by the pump 25 as indicated by an arrow D direction in the drawing. Note that, in Fig. 3, the electrolyte is circulated in the arrow D direction (clockwise direction) in the drawing by the pump 25, but may be circulated in a counterclockwise direction in the drawing by the pump 15.

When the electrolyte maintenance mode is set, it is possible to appropriately adjust balance of the electrolyte, that is, balance of a valence number ratio.

Here, the balance of the electrolyte in the positive electrode and the negative electrode may collapse due to consumption of a vanadium electrolyte at a time other than the charge/discharge reaction, or the like, and thus there is a concern of deterioration of charge/discharge efficiency and corrosion of electrodes due to an overvoltage. Accordingly, when a part of the positive-electrode electrolyte and a part of the negative-electrode electrolyte are appropriately mixed, the valence number balance of vanadium in the electrolyte is adjusted, and thus balance of the charge/discharge reaction is maintained.

Note that, from the viewpoint of the valence number balance, it is preferable to perform the electrolyte maintenance mode at an appropriate flow rate or time to achieve an appropriate movement amount.

### (Timer)

The timer 51 integrates an operation time of the battery cell 2, for example, a charge time and a discharge time, respectively, and transmits the operation time to the mode setting means 50.

The mode setting means 50 can execute the acid circulation maintenance mode or the electrolyte maintenance mode on the basis of a detection signal (operation time) fed from the timer 51. The mode setting means 50 may create a correlational expression between the operation time and the amount of precipitates, or a correlational expression between the operation time and a valence number variation rate of the electrolyte under the same condition in advance, and may execute the acid circulation maintenance mode or the electrolyte maintenance mode on the basis of the correlational expressions. Note that, it cannot be said that the correlational expression are proportional expressions.

### (Precipitate Detecting Means)

As the precipitate detecting means 52, for example, it is possible to use an output detecting means that detects a decrease of a battery output, a pressure gauge that detects a pump feeding pressure for feeding the electrolyte, a flow meter that detects a flow rate of the electrolyte, or a measurement device provided with a transparent window through which precipitates in a pipe can be visually recognized, an in-liquid particle counter, or a particle size distribution meter in a flow passage of the electrolyte to detect precipitates without particular limitation as long as it is possible to detect presence and absence of precipitation of precipitates.

The mode setting means 50 executes the acid circulation maintenance mode on the basis of a detection result of the precipitate detecting means 52. Although appropriate selection can be performed in accordance with use conditions and the like, for example, when it is detected that an output of the output detecting means decreases from an operation setting output value to a predetermined value or less, for example, the operation setting output value decreases by 10% or greater, the mode setting means 50 may determine that precipitates precipitate in a predetermined amount or greater, and may execute the acid circulation maintenance mode. The operation setting output value represents an initial value of the precipitate detecting means 52, or a setting value that is appropriately set. In addition, in a case where rising from an initial value by a predetermined value or greater is confirmed by the pressure gauge and the flow meter, the mode setting means 50 may determine that precipitates precipitate in a predetermined amount or greater and may execute the acid circulation maintenance mode. In addition, in a case where a predetermined amount or greater of precipitates are confirmed from a measurement result by the transparent window, the in-liquid particle counter, or the particle size distribution meter, the mode setting means 50 may execute the acid circulation maintenance mode.

### (Valence Number Detecting Means)

As the valence number detecting means 53, for example, it is possible to use an output detecting means that detects a decrease of the battery output, a voltmeter that detects a potential of the electrolyte, a monitor cell that measures an open voltage of the battery cell, or the like without particular limitation as long as it is possible to detect a valence number of vanadium ions and it is possible to determine a variation of a valence number ratio of the vanadium ions. In addition, as the valence number detecting means 53, it is possible to use a measurement device that measures a color or transparency of the electrolyte which varies in accordance with the valence number of the vanadium ions, or a measurement means that measures a measurement device (ultraviolet visible light spectrometer, or the like) that measures a variation of absorbance.

The mode setting means 50 executes the electrolyte maintenance mode on the basis of a detection result of the valence number detecting means 53. For example, although appropriate selection can be performed in accordance with use conditions and the like, for example, when it is detected that an output of the output detecting means decreases from the operation setting value by a predetermined value or greater, for example, the operation setting value decreases by 10% or greater, the mode setting means 50 may determine that a variation of the valence number ratio of the vanadium ions is great, and may execute the electrolyte maintenance mode. In addition, in a case where a measurement value of the voltmeter, the monitor cell, or the measurement means that measures the color, the transparency, and the absorbance of the electrolyte exceeds a predetermined range, the mode setting means 50 may determine that the variation of the valence number ratio of the vanadium ions great, and may execute the electrolyte maintenance mode.

As described above, the redox flow battery system according to this embodiment includes the maintenance tank 40 that stores the cleaning liquid containing sulfuric acid, and thus it is possible to dissolve and remove precipitates, and it is possible to realize adjustment of the balance of the electrolyte. Particularly, this configuration is suitable for a redox flow battery system that uses an electrolyte in which the concentration of vanadium ions is high. In addition, the redox flow battery system according to this embodiment includes the maintenance tank 40 that is common to the positive-electrode cell 12 and the negative-electrode cell 22, and thus it is possible to obtain the above-described effect in a smaller amount of the cleaning liquid and in a smaller space in comparison to a case where the maintenance tank is individually provided with respect to the positive-electrode cell 12 and the negative-electrode cell 22.

### <Operation Method of Redox Flow Battery>

An operation method of the redox flow battery 1 according to this embodiment is an operation method of the redox flow battery 1 that performs charge/discharge by circulating an electrolyte containing vanadium as an active material to the battery cell 2. The operation method includes a charge/discharge process of executing a charge/discharge mode in which the positive-electrode electrolyte containing tetravalent and/or pentavalent vanadium is circulated from the positive-electrode electrolyte tank 11 that stores the positive-electrode electrolyte to the battery cell 2, and the negative-electrode electrolyte containing divalent and/or trivalent vanadium is circulated from the negative-electrode electrolyte tank 21 that stores the negative-electrode electrolyte to the battery cell 2, an acid circulation maintenance process of executing an acid circulation mode in which the cleaning liquid containing the sulfuric acid is circulated from the maintenance tank 40 that stores the cleaning liquid to the battery cell 2, and an electrolyte maintenance process of executing an electrolyte maintenance mode in which the electrolyte is circulated from the maintenance tank 40 to the positive-electrode electrolyte tank 11 and the negative-electrode electrolyte tank 21.

Specifically, the operation method of the redox flow battery 1 includes a charge/discharge process of circulating the electrolyte in the positive-electrode electrolyte tank 11 and the negative-electrode electrolyte tank 21 to the battery cell 2 as illustrated in Fig. 1, an acid circulation maintenance process of circulating the cleaning liquid in the maintenance tank 40 to the battery cell 2 as illustrated in Fig. 2, and an electrolyte maintenance process of circulating the electrolyte between the positive-electrode electrolyte tank 11 and the negative-electrode electrolyte tank 21 as illustrated in Fig. 3.

As described above, in the acid circulation maintenance process or the electrolyte maintenance process, it is possible to execute the acid circulation maintenance mode or the electrolyte maintenance mode in correspondence with a detection result (operation time) of the timer 51.

In the acid circulation maintenance process, it is preferable to execute the acid circulation maintenance mode on the basis of a detection result of the precipitate detecting means 52 that detects a presence state of precipitates in the electrolyte.

In the electrolyte maintenance process, it is preferable to execute the electrolyte maintenance mode on the basis of a detection result of the valence number detecting means 53 that detects a valence number of vanadium ions in the positive-electrode electrolyte and the negative-electrode electrolyte.

As described above, according to the operation method of the redox flow battery 1 according to this embodiment, even in a case of using the high concentration vanadium electrolyte, it is possible to achieve high charge/discharge efficiency, and suppression of corrosion by dissolving and removing precipitates which precipitate in a positive electrode, a negative electrode, and circulation paths thereof and by adjusting balance of the electrolyte with a simple configuration.

### EXAMPLES

Hereinafter, the invention will be described in more detail with reference to examples, but the invention is not limited to the examples.

### [Comparative Example 1]

The battery cell 2 illustrated in Fig. 1 was prepared. As the positive electrode 10 and the negative electrode 20, a commercially available carbon felt electrode was used. A total area of each of the electrodes was set to 200 cm². As the membrane, a commercially available ion exchange membrane was used. As the positive-electrode electrolyte, 3.0 mol/L-H₂SO₄ aqueous solution in which the concentration of tetravalent vanadium ions is 1.5 mol/L was used. As the negative-electrode electrolyte, 3.0 mol/L-H₂SO₄ aqueous solution in which the concentration of trivalent vanadium ions is 1.5 mol/L was used. The electrolyte was used in an amount of 250 mL in the positive electrode and the negative electrode.

In addition, the charge/discharge mode was executed by the mode setting means 50, and charge was performed in a current density of 100 mA/cm² while the positive-electrode electrolyte and the negative-electrode electrolyte were respectively supplied and circulated to the positive-electrode cell 12 and the negative-electrode cell 22 in an amount of 180 mL/minute. When a voltage reached 1.6 V, charge was stopped and discharge was subsequently performed in 100 mA/cm². When a voltage reached 1.0 V, discharge was terminated. Charge and discharge were repeated for 50 cycles. Battery efficiency (calculated as voltage efficiency in a state in which the voltage efficiency at a first cycle was set as 100%) at a fiftieth cycle and a liquid energy density were 94% and 49 kWh/m³, respectively. The liquid energy density is a value obtained by adding up liquid energy densities of the positive electrode and the negative electrode. Then, 50 cycles of charge and discharge were repeated. As a result, the battery efficiency and the liquid energy density decreased to 87% and 45 kWh/m³, respectively.

### [Comparative Example 2]

As the positive-electrode electrolyte, 3.0 mol/L-H₂SO₄ aqueous solution in which the concentration of tetravalent vanadium ions is 3.0 mol/L was used. As the negative-electrode electrolyte, 3.0 mol/L-H₂SO₄ aqueous solution in which the concentration of trivalent vanadium ions is 3.0 mol/L was used. The other configurations were set in the same manner as in Comparative Example 1, and the charge/discharge mode was executed. The battery efficiency and the liquid energy density at a fiftieth cycle were 91% and 45 kWh/m³, respectively. When charge and discharge were further repeated for 50 cycles, the battery efficiency and the liquid energy density decreased to 81% and 39 kWh/m³, respectively.

### [Example 1]

The same battery cell 2 as in Comparative Example 1 was used, and the charge/discharge mode was executed by the mode setting means 50 to repeat charge and discharge for 50 cycles. The battery efficiency and the liquid energy density at a fiftieth cycle were 94% and 49 kWh/m³, respectively. In addition, the acid circulation mode was executed by the mode setting means 50, and a cleaning liquid composed of 3.0 mol/L-H₂SO₄ aqueous solution in the maintenance tank 40 was supplied and circulated to the positive-electrode cell and the negative-electrode cell in an amount of 180 mL/minute for one hour. Then, the charge and discharge mode was executed again by the mode setting means 50, and charge and discharge were repeated for 50 cycles. The battery efficiency and the liquid energy density at a first cycle after executing the acid circulation mode were 97% and 51 kWh/m³, respectively, and the battery efficiency and the liquid energy density at a fiftieth cycle were 91% and 47 kWh/m³, respectively. From this result, recovery of battery characteristics was confirmed.

### [Example 2]

The same battery cell 2 as in Comparative Example 1 was used, and the charge/discharge mode was executed by the mode setting means 50 to repeat charge and discharge for 50 cycles. The battery efficiency and the liquid energy density at a fiftieth cycle were 94% and 49 kWh/m³, respectively. In addition, the acid circulation mode was executed by the mode setting means 50, and a cleaning liquid composed of 3.0 mol/L-H₂SO₄ aqueous solution in the maintenance tank 40 was supplied and circulated to the positive-electrode cell and the negative-electrode cell in an amount of 180 mL/minute for one hour. Then, the electrolyte maintenance mode was further executed by the mode setting means 50, and a part of the electrolyte was moved between the positive-electrode electrolyte tank 11 and the negative-electrode electrolyte tank 21 to adjust the valence number balance of vanadium. In addition, the charge/discharge mode was executed again by the mode setting means 50, and charge and discharge were repeated for 50 cycles. The battery efficiency and the liquid energy density at a first cycle after executing the electrolyte maintenance mode were 99% and 52 kWh/m³, respectively, and the battery efficiency and the liquid energy density at a fiftieth cycle were 93% and 50 kWh/m³, respectively. From this result, recovery of battery characteristics was confirmed.

### [Example 3]

The same battery cell 2 as in Comparative Example 2 was used, and the charge/discharge mode was executed by the mode setting means 50 to repeat charge and discharge for 50 cycles. The battery efficiency and the liquid energy density at a fiftieth cycle were 91% and 45 kWh/m³, respectively. In addition, the acid circulation mode was executed by the mode setting means 50, and a cleaning liquid composed of 3.0 mol/L-H₂SO₄ aqueous solution in the maintenance tank 40 was supplied and circulated to the positive-electrode cell and the negative-electrode cell in an amount of 180 mL/minute for one hour. Then, the charge/discharge mode was executed again by the mode setting means 50, and charge and discharge were repeated for 50 cycles. The battery efficiency and the liquid energy density at a first cycle after executing the acid circulation mode were 97% and 50 kWh/m³, respectively, and the battery efficiency and the liquid energy density at a fiftieth cycle were 88% and 46 kWh/m³, respectively. From this result, recovery of battery characteristics was confirmed.

### [Example 4]

The same battery cell 2 as in Comparative Example 2 was used, and the charge/discharge mode was executed by the mode setting means 50 to repeat charge and discharge for 50 cycles. The battery efficiency and the liquid energy density at a fiftieth cycle were 91% and 45 kWh/m³, respectively. In addition, the acid circulation mode was executed by the mode setting means 50, and a cleaning liquid composed of 3.0 mol/L-H₂SO₄ aqueous solution in the maintenance tank 40 was supplied and circulated to the positive-electrode cell and the negative-electrode cell in an amount of 180 mL/minute for one hour. Then, the electrolyte maintenance mode was further executed by the mode setting means 50, and a part of the electrolyte was moved between the positive-electrode electrolyte tank 11 and the negative-electrode electrolyte tank 21 to adjust the valence number balance of vanadium. In addition, the charge/discharge mode was executed again by the mode setting means 50, and charge and discharge were repeated for 50 cycles. The battery efficiency and the liquid energy density at a first cycle after executing the electrolyte maintenance mode were 99% and 52 kWh/m³, respectively, and the battery efficiency and the liquid energy density at a fiftieth cycle were 90% and 48 kWh/m³, respectively. From this result, recovery of battery characteristics was confirmed.

### EXPLANATION OF REFERENCE NUMERALS

- 1: REDOX FLOW BATTERY
- 2: BATTERY CELL
- 3: AC/DC CONVERTER
- 4: AC POWER SUPPLY
- 5: LOAD POWER SUPPLY
- 10: POSITIVE ELECTRODE
- 11: POSITIVE-ELECTRODE ELECTROLYTE TANK
- 12: POSITIVE-ELECTRODE CELL
- 13: POSITIVE-ELECTRODE ELECTROLYTE OUTGOING PIPE
- 14: POSITIVE-ELECTRODE ELECTROLYTE RETURN PIPE
- 15: PUMP
- 20: NEGATIVE ELECTRODE
- 21: NEGATIVE-ELECTRODE ELECTROLYTE TANK
- 22: NEGATIVE-ELECTRODE CELL
- 23: NEGATIVE-ELECTRODE ELECTROLYTE OUTGOING PIPE
- 24: NEGATIVE-ELECTRODE ELECTROLYTE RETURN PIPE
- 25: PUMP
- 30: MEMBRANE
- 40: MAINTENANCE TANK
- 41: CLEANING LIQUID OUTGOING PIPE
- 42: CLEANING LIQUID RETURN PIPE
- 43: PUMP
- 44, 45, 46: OUTGOING CONTROL VALVE
- 47, 48, 49: RETURN CONTROL VALVE
- 50: MODE SETTING MEANS
- 51: TIMER
- 52: PRECIPITATE DETECTING MEANS
- 53: VALENCE NUMBER DETECTING MEANS

## Claims

1. A redox flow battery system that performs charge/discharge by circulating an electrolyte containing vanadium as an active material to a battery cell, the redox flow battery system comprising:
a positive-electrode electrolyte tank that stores a positive-electrode electrolyte containing tetravalent and/or pentavalent vanadium;
a positive-electrode electrolyte outgoing pipe through which the positive-electrode electrolyte is fed from the positive-electrode electrolyte tank to the battery cell;
a positive-electrode electrolyte return pipe through which the positive-electrode electrolyte is returned from the battery cell to the positive-electrode electrolyte tank;
a negative-electrode electrolyte tank that stores a negative-electrode electrolyte containing divalent and/or trivalent vanadium;
a negative-electrode electrolyte outgoing pipe through which the negative-electrode electrolyte is fed from the negative-electrode electrolyte tank to the battery cell;
a negative-electrode electrolyte return pipe through which the negative-electrode electrolyte is returned from the battery cell to the negative-electrode electrolyte tank;
a maintenance tank that stores a cleaning liquid containing sulfuric acid;
a cleaning liquid outgoing pipe that is connected to the positive-electrode electrolyte outgoing pipe and the negative-electrode electrolyte outgoing pipe to transmit the cleaning liquid from the maintenance tank to the battery cell; and
a cleaning liquid return pipe that is connected to the positive-electrode electrolyte return pipe and the negative-electrode electrolyte return pipe to return the cleaning liquid from the battery cell to the maintenance tank.

2. The redox flow battery system according to claim 1,
wherein the positive-electrode electrolyte and/or the negative-electrode electrolyte contain vanadium ions of 1.2 mol/L or greater.

3. The redox flow battery system according to claim 1 or 2,
wherein a sulfuric acid concentration of the positive-electrode electrolyte and a sulfuric acid concentration of the negative-electrode electrolyte, and a sulfuric acid concentration of the cleaning liquid are approximately the same as each other.

4. The redox flow battery system according to any one of claims 1 to 3,
wherein the cleaning liquid is an aqueous solution containing sulfuric acid of which the sulfuric acid concentration is 0.5 mol/L or more to 6 mol/L or less.

5. The redox flow battery system according to any one of claims 1 to 4,
wherein one end of the cleaning liquid outgoing pipe is connected to the maintenance tank, another end of the cleaning liquid outgoing pipe is connected to the positive-electrode electrolyte outgoing pipe and the negative-electrode electrolyte outgoing pipe in a branched state, and
the cleaning liquid outgoing pipe comprises outgoing control valves which control flow of the electrolyte and the cleaning liquid and the outgoing control valves are respectively provided in a portion before branching of the cleaning liquid outgoing pipe, a connection portion between the cleaning liquid outgoing pipe and the positive-electrode electrolyte outgoing pipe, and a connection portion between the cleaning liquid outgoing pipe and the negative-electrode electrolyte outgoing pipe, and
one end of the cleaning liquid return pipe is connected to the maintenance tank, another end of the cleaning liquid return pipe is connected to the positive-electrode electrolyte return pipe and the negative-electrode electrolyte return pipe in a branched state, and
the cleaning liquid return pipe comprises return control valves which control flow of the electrolyte and the cleaning liquid and the return control valves are respectively provided in a portion before branching of the cleaning liquid return pipe, a connection portion between the cleaning liquid return pipe and the positive-electrode electrolyte return pipe, and a connection portion between the cleaning liquid return pipe and the negative-electrode electrolyte return pipe.

6. The redox flow battery system according to claim 5, by controlling the outgoing control valves and the return control valves, further comprising:
a mode setting means capable of setting a charge/discharge mode in which the positive-electrode electrolyte circulates through the positive-electrode electrolyte tank and the battery cell, and the negative-electrode electrolyte circulates through the negative-electrode electrolyte tank and the battery cell,
an acid circulation maintenance mode in which the cleaning liquid circulates through the maintenance tank and the battery cell, and
an electrolyte maintenance mode in which a part of the electrolyte is moved from the positive-electrode electrolyte tank to the negative-electrode electrolyte tank, or from the negative-electrode electrolyte tank to the positive-electrode electrolyte tank to adjust a redox state of the respective electrolyte tanks.

7. The redox flow battery system according to claim 6,
wherein the mode setting means sets the acid circulation maintenance mode or the electrolyte maintenance mode in correspondence with an operation time.

8. The redox flow battery system according to claim 6,
wherein the mode setting means sets the acid circulation maintenance mode on the basis of a detection result of a precipitate detecting means that detects a presence state of precipitates in the electrolyte.

9. The redox flow battery system according to claim 6,
wherein the mode setting means sets the electrolyte maintenance mode on the basis of a detection result of a valence number detecting means that detects an average valence number of vanadium ions in the positive-electrode electrolyte and the negative-electrode electrolyte.

10. A method of operating a redox flow battery that performs charge/discharge by circulating an electrolyte containing vanadium as an active material to a battery cell, the method comprising:
a charge/discharge process of executing a charge/discharge mode in which a positive-electrode electrolyte containing tetravalent and/or pentavalent vanadium is circulated from a positive-electrode electrolyte tank that stores the positive-electrode electrolyte to the battery cell, and a negative-electrode electrolyte containing divalent and/or trivalent vanadium is circulated from a negative-electrode electrolyte tank that stores the negative-electrode electrolyte to the battery cell;
an acid circulation process of executing an acid circulation maintenance mode in which a cleaning liquid containing sulfuric acid is circulated from a maintenance tank that stores the cleaning liquid to the battery cell; and
an electrolyte maintenance process of executing an electrolyte maintenance mode in which a part of the electrolyte is moved from the positive-electrode electrolyte tank to the negative-electrode electrolyte tank or from the negative-electrode electrolyte tank to the positive-electrode electrolyte tank.

11. The method of operating a redox flow battery according to claim 10,
wherein the positive-electrode electrolyte and/or the negative-electrode electrolyte contain vanadium ions of 1.2 mol/L or greater.

12. The method of operating a redox flow battery according to claim 10 or 11,
wherein a sulfuric acid concentration of the positive-electrode electrolyte and a sulfuric acid concentration of the negative-electrode electrolyte, and a sulfuric acid concentration of the cleaning liquid are approximately the same as each other.

13. The method of operating a redox flow battery according to any one of claims 10 to 12,
wherein the cleaning liquid is an aqueous solution containing sulfuric acid of which the sulfuric acid concentration is 0.5 mol/L to 6 mol/L.

14. The method of operating a redox flow battery according to any one of claims 10 to 13,
wherein in the electrolyte maintenance process, the acid circulation maintenance mode or the electrolyte maintenance mode is executed in correspondence with an operation time.

15. The method of operating a redox flow battery according to any one of claims 10 to 13,
wherein in the acid circulation process, the acid circulation maintenance mode is executed on the basis of a detection result of a precipitate detecting means that detects a presence state of precipitates in the electrolyte.

16. The method of operating a redox flow battery according to any one of claims 10 to 13,
wherein in the electrolyte maintenance process, the electrolyte maintenance mode is executed on the basis of a detection result of a valence number detecting means that detects an average valence number of vanadium ions in the positive-electrode electrolyte and the negative-electrode electrolyte.
